# EUROPÄISCHE PATENTANMELDUNG

(11) **EP 4 656 353 A1**
(43) Veröffentlichungstag der Anmeldung: **03.12.2025**
(21) Anmeldenummer: 25177991.4
(22) Anmeldetag: 21.05.2025
(51) Int. Cl.: B29C 48/691, B29C 48/25, B29C 48/27, B29B 7/58

(54) **FILTRIERVORRICHTUNG**

(30) Priorität: 27.05.2024 DE 102024114802
(71) Anmelder: Maag Germany GmbH, 63762 Großostheim (DE)
(72) Erfinder: LEBERT, Christian, 63840 Hausen (DE)
(74) Vertreter: Lorenz Seidler Gossel Part. mbB

(57) **Zusammenfassung**

Die vorliegende Erfindung betrifft eine Filtriervorrichtung zum Filtrieren von Kunststoffschmelze, mit einem Gehäuse, das einen Einlasskanal und einen Auslasskanal aufweist, sowie einem Filterbolzen, der zwischen den genannten Einlass- und Auslasskanälen angeordnet und in einer Bolzenaufnahme des Gehäuses axial verschieblich und verdrehbar aufgenommen ist, wobei der Filterbolzen einen Filterabschnitt mit einer Filtriereinrichtung, die in einer Arbeitsstellung des Filterbolzens zwischen dem Einlasskanal und dem Auslasskanal angeordnet ist und den genannten Einlasskanal mit dem Auslasskanal verbindet, sowie einen Ableitkanal aufweist, der in einer Anfahrstellung des Filterbolzens mit dem Einlasskanal strömungsverbunden ist und an der Filtriereinrichtung vorbei zu einem Ableitablauf des Filterbolzens führt, wobei der Filterbolzen in der genannten Arbeitsstellung einerseits und der genannten Anfahrstellung andererseits unterschiedliche Drehstellungen in der Bolzenaufnahme einnimmt, wobei eine am Außenumfang des Filterbolzens liegende Einlassöffnung des Ableitkanals in einem Umfangssektor des Filterbolzens liegt, der in der Arbeitsstellung des Filterbolzens gegenüber dem Einlasskanal des Gehäuses rotatorisch versetzt ist und in der Anfahrstellung des Filterbolzens sich mit dem genannten Einlasskanal überdeckend angeordnet ist.

## Beschreibung

Die vorliegende Erfindung betrifft eine Filtriervorrichtung zum Filtrieren von Kunststoffschmelze, mit einem Gehäuse, das einen Einlasskanal und einen Auslasskanal für die Schmelze aufweist, sowie einen Filterbolzen, der zwischen den Einlass- und Auslasskanälen angeordnet und in einer Bolzenaufnahme des Gehäuses axial verschieblich und verdrehbar aufgenommen ist, wobei der Filterbolzen einen Filterabschnitt mit einer Filtriereinrichtung, der in einer Arbeitsstellung des Filterbolzens zwischen den Einlass- und Auslasskanälen angeordnet ist und die genannten Einlass- und Auslasskanäle miteinander verbindet, sowie einen Ableitkanal aufweist, der in einer Anfahrstellung des Filterbolzens mit dem Einlasskanal strömungsverbunden ist und an der Filtriereinrichtung vorbei zu einem Ableitablauf des Filterbolzens führt.

Solche Filtriervorrichtungen zum Filtrieren von Kunststoffschmelze werden in der Fachwelt üblicherweise als Siebwechsler bezeichnet, da der beweglich im Gehäuse geführte Filterbolzen soweit aus dem Gehäuse heraus in eine Filterwechselstellung schiebbar ist, in der die Filtriereinrichtung frei zugänglich ist bzw. soweit aus dem Gehäuse heraussteht, dass die Filtriereinrichtung gewechselt werden kann, vgl. bspw. DE 10 2010 025 163 A1 oder DE 20 2010 017 247 U1, oder DE 10 2012 006 563 B3, DE 10 2006 050 683 A1 und DE 195 09 059 C1. Um die Anlage dabei kontinuierlich fahren zu können, können in dem Gehäuse zwei oder mehr Filterbolzen mit jeweils einer Filtriereinrichtung beweglich aufgenommen sein und in ihren Arbeitsstellungen jeweils einen Weg für das zu filtrierende Fluid vom Einlasskanal des Gehäuses zum Auslasskanal schaffen. Wird einer der Filterbolzen in die besagte Filterwechselstellung gefahren, bleibt für das Fluid der Weg über zumindest einen weiteren Filterbolzen bzw. dessen Filtriereinrichtung, der in Arbeitsstellung verbleibt, um von der Einlass- zur Auslassseite zu gelangen. Um die Filter leichter entnehmen bzw. wechseln zu können, können die Bolzen beim Herausfahren aus dem Gehäuse in die Filterwechselstellung zusätzlich auch verdreht werden, bspw. über eine Kulissenführung, vgl. DE 10 2014 016 634 A1.

Die Filterbolzen sind dabei in ihrer jeweiligen Bolzenaufnahme im Gehäuse nahezu spielfrei bzw. soweit fluiddicht geführt, dass die Kunststoffschmelze die Bolzenaufnahme lediglich queren kann, wenn der Filterabschnitt des Bolzens in der Arbeitsstellung passend zwischen Einlass- und Auslasskanälen sitzt und sich die Kunststoffschmelze nicht zwischen benachbarten Bolzenabschnitten und der Bolzenaufnahmewandung hindurchdrücken kann.

Die Filtriervorrichtung dient dabei häufig dazu, aufgeschmolzenen Kunststoff beispielsweise in Form einer polymeren Schmelze von unerwünschten Fremdpartikeln durch Filtration zu befreien, da derartige Fremdpartikel zu einer Fehlproduktion bzw. Qualitätseinbußen führen würden. Zunehmende Bedeutung haben diese Filtriervorrichtungen durch die Wiederaufbereitung im Rahmen des Recycelns von thermoplastischen Kunststoffen gewonnen.

Abhängig davon, wie stark der Verschmutzungsgrad des jeweiligen zu filtrierenden Fluids bzw. Kunststoffs ist, verändert sich die Standzeit der hierfür verwendeten Filter, so dass bei einem zunehmenden Verschmutzungsgrad der Filter entweder durch Rückspülen oder durch Austausch gereinigt bzw. erneuert werden muss.

Zusätzlich können die Siebwechsler auch dazu verwendet werden, beim Anfahren eines Produktionszyklus bzw. einer Kunststoffcharge die noch mangelbehaftete Schmelze abzuleiten, bevor diese in eine nachfolgende Verarbeitungsanlage wie beispielsweise einen Granulator gegeben wird. Beim Anfahren des Prozesses hat die Schmelze oft noch nicht die erforderliche Temperatur, oder es können beispielsweise bei einem Farbwechsel noch Verschmutzungen bzw. Rückstände andersfarbigen Materials in den Kanälen der Anlage zurückgeblieben sein, so dass das anfänglich zuströmende Material noch nicht zu gebrauchen ist und gegebenenfalls auch die Filter des Siebwechslers zusetzen würde. Je nach Anlagengröße werden dabei zum Teil beträchtliche Materialmengen von bis zu einer halben oder auch einer ganzen Tonne als Ausschuss abgeleitet, bevor für die Weiterverarbeitung geeignete Schmelze durch die Filtriereinrichtung hindurch auf die nachfolgende Weiterverarbeitungsanlage gegeben werden kann.

Das Ableiten des Materials während dem Anfahrvorgang kann durch spezielle Anfahrventile bewerkstelligt werden, die insbesondere stromauf oder ggf. auch stromab der Siebwechsler eingesetzt werden können, um noch ungeeignetes Material abzuleiten, beispielsweise auf den Boden rinnen bzw. tropfen zu lassen oder in einem Auffanggefäß aufzusammeln.

Um solche separaten Anfahrventile zu vermeiden, wurde auch schon vorgeschlagen, die Siebwechsler selbst zum Ableiten des Materials während des Anfahrvorgangs zu verwenden. Hierzu kann beispielsweise der Filterbolzen soweit in das Gehäuse hinein bzw. aus dem Gehäuse wieder herausgezogen werden, dass der Filterbolzen die Bolzenaufnahme auf einer Seite des Einlasskanals versperrt, andererseits aber der Einlasskanal ohne Behinderung durch den Filterbolzen in die Bolzenaufnahme hineinführt und dementsprechend einströmende Schmelze in die Bolzenaufnahme strömen, sich dort sammeln und auf der unblockierten Seite aus der Bolzenaufnahme des Gehäuses herauslaufen kann. Wird der Filterbolzen zurück in seine Arbeitsstellung verschoben, räumt der Filterbolzen das noch in der Bolzenaufnahme befindliche Anfahrmaterial aus der Bolzenaufnahme heraus. Durch die frei in das Gehäuse hineinlaufende bzw. sich in der Bolzenaufnahme sammelnde Kunststoffschmelze kommt es jedoch zu Verunreinigungen des Siebwechslers und häufig auch zu erhöhtem Verschleiß, da beispielsweise verkorkste Kunststoffbestandteile sich am Gehäuse festsetzen können und dann beim Zurückschieben des Filterbolzens losgerissen werden müssen. Zudem benötigt der Axialantrieb einen langen Stellweg und daher eine große Baulänge, um einerseits den Filterbolzen in die Filterwechselstellung zu einer Seite aus dem Gehäuse herausfahren und andererseits den Filterbolzen für das anfägnlcieh Ableiten beim Anfahren entgegengesetzt über die Arbeitsstellung hinaus zurückfahren zu können.

Es wurde zum Abführen des Materials während der Anfahrphase auch bereits vorgeschlagen, im Filterbolzen einen speziellen Ableitkanal vorzusehen und den Filterbolzen in eine Anfahrposition zu verschieben, in der der Ableitkanal mit einer umfangsseitigen Zuströmöffnung mit dem gehäuseseitigen Einlasskanal fluchtet und der Filterbolzen ein Stück weit aus dem Gehäuse heraussteht, so dass der dort vorgesehene Ableitablauf des Ableitkanals außerhalb des Gehäuses liegt und das Material bzw. Fluid nicht mehr das Gehäuse verschmutzt, sondern direkt vom Filterbolzen auf den Boden tropfen kann.

Die Schrift DE 10 2014 009 768 B4 zeigt einen solchen Siebwechsler mit einem Filterbolzen, der diese Ableitfunktion erfüllen kann. Der Ableitkanal erstreckt sich dabei durch einen zentralen Steg hindurch, der die Filtrierkammer des Filterbolzens axial durchsetzt, so dass der Ableitkanal wie durch ein Rohr hindurch an der Filtriereinrichtung vorbeigeführt ist, um vom Einlasskanal des Gehäuses her empfangene Kunststoffschmelze an der Filtereinrichtung des Bolzens vorbei zu dessen aus dem Gehäuse vorstehender Bolzenstirnseite zu führen, von der die Kunststoffschmelze dann auf den Boden tropfen kann.

Da die Filtereinrichtung des Bolzens üblicherweise einen ausreichenden Strömungsquerschnitt benötigt und gerade zulaufseitig bisweilen länger baut als der Einlasskanal im Gehäuse, um am Filter eine Verteilung des zu filtrierenden Guts zu ermöglichen, ist die Einlassöffnung des Ableitkanals axial relativ weit vom Einlasskanal des Gehäuses versetzt angeordnet, so dass der Filterbolzen insgesamt recht weit verstellt werden muss, um die Einlassöffnung des Ableitkanals mit dem gehäuseseitigen Einlasskanal in Fluchtung zu bringen. Hierdurch baut die Vorrichtung in axialer Richtung recht groß. Zum anderen ist die Dichtigkeit zwischen Filterbolzen und Bolzenaufnahme gerade im Bereich um den Einlasskanal herum recht diffizil, da hier der Staudruck vor der Filtereinrichtung zunimmt, so dass die Umfangswandung des Filterbolzens um die Filtriereinrichtung herum ein gewisses Maß benötigt, um die Dichtigkeit des Filterbolzens gegenüber der Bolzenaufnahme sicherstellen zu können.

Hiervon ausgehend liegt der vorliegenden Erfindung die Aufgabe zugrunde, eine verbesserte Filtriervorrichtung der genannten Art zu schaffen, die Nachteile des Stands der Technik vermeidet und letzteren in vorteilhafter Weise weiterbildet. Insbesondere soll bei kompakter Bauweise der Filtriervorrichtung für die Weiterverarbeitung ungeeignetes Material beispielsweise während eines Anfahrprozesses einfach und verlässlich an der Filtereinrichtung vorbei abgeleitet werden können, ohne im Siebwechsler Verschmutzungen und Verschleiß zu erleiden oder gar separate Anfahrventile zu benötigen.

Erfindungsgemäß wird die genannte Aufgabe durch eine Filtriervorrichtung gemäß Anspruch 1 gelöst. Bevorzugte Ausgestaltungen der Erfindung sind Gegenstand der abhängigen Ansprüche.

Es wird also vorgeschlagen, den Filterbolzen gegenüber seiner Arbeitsstellung zu verdrehen, um ihn in die Anfahrstellung zu verbringen. Erfindungsgemäß nimmt der Filterbolzen in der genannten Arbeitsstellung einerseits und der genannten Anfahrstellung andererseits unterschiedliche Drehstellungen in der Bolzenaufnahme ein, wobei eine am Außenumfang des Filterbolzens liegende Einlassöffnung des Ableitkanals in einem Umfangssektor des Filterbolzens liegt, der in der Arbeitsstellung des Filterbolzens gegenüber dem Einlasskanal des Gehäuses rotatorisch versetzt ist und in der Anfahrstellung des Filterbolzens sich mit dem genannten Einlasskanal überdeckt. Durch die rotatorische Stellbewegung des Filterbolzens in die Anfahrstellung und den rotatorischen Versatz zwischen dem Einlass der Filtereinrichtung einerseits und dem Einlass des Ableitkanals andererseits kann der Filterbolzen in axialer Richtung recht kurz bauen, was eine kurze Stellbewegung in die Anfahrstellung ermöglicht und letztlich eine insgesamt kompakte Bauweise der Filtriervorrichtung ermöglicht. Gleichzeitig können Dichtigkeitsprobleme in der Arbeitsstellung zwischen Filterbolzen und Bolzenaufnahme im Gehäuse vermieden werden.

In vorteilhafter Weiterbildung der Erfindung kann die genannte rotatorische Stellbewegung des Filterbolzens mit einer axialen Stellbewegung des Filterbolzens überlagert werden, um den Filterbolzen zwischen seiner Arbeitsstellung und seiner Anfahrstellung zu verstellen. Durch ein solches kombinatorisches Verdrehen und Verschieben kann trotz kurzer Stellbewegungen und kompakter Bauweise ein verlässliches Ableiten der auszuscheidenden Schmelze bzw. des abzuleitenden Fluids erzielt werden. Insbesondere kann die überlagerte Axialbewegung, um den Filterbolzen aus der Arbeitsstellung in die Anfahrstellung zu verbringen, dazu dienen, den Filterbolzen, der in der Arbeitsstellung vollständig oder im Wesentlichen bündig im Gehäuse versenkt angeordnet sein kann, ein Stück weit aus dem Gehäuse herauszufahren, um sicherzustellen, dass aus dem Ableitkanal herausströmende Kunststoffschmelze sich nicht im oder am Gehäuse verfängt, sondern direkt vom Filterbolzen abtropfen kann.

Die Anfahrstellung des Filterbolzens kann dabei axial betrachtet zwischen der Arbeitsstellung und einer Filterwechselstellung des Filterbolzens liegen, in welcher die Filtereinrichtung des Filterbolzens für einen Filterwechsel frei zugänglich bzw. ausreichend weit zugänglich ist, insbesondere im Wesentlichen vollständig aus dem Gehäuse herausgefahren ist. In der genannten Anfahrstellung kann die Filtereinrichtung hingegen noch vollständig oder zumindest teilweise im Inneren des Filtergehäuses positioniert sein, andererseits aber vom Einlasskanal des Gehäuses weggefahren sein, um das über den Einlasskanal einströmende Fluid in den Ableitkanal gelangen zu lassen.

Um rasch von der Anfahrstellung in die Arbeitsstellung schalten zu können, kann in Weiterbildung der Erfindung der axiale Stellweg des Filterbolzens von der Arbeitsstellung in die Anfahrstellung kürzer als von der Anfahrstellung in die Filterwechselstellung sein. Insbesondere kann die Anfahrstellung des Filterbolzens so nahe an dessen Arbeitsstellung liegen, dass in der Anfahrstellung die Filtriereinrichtung des Filterbolzens bereits oder noch vollständig im Inneren des Gehäuses angeordnet ist.

Durch die Anordnung der Anfahr- bzw. Ableitstellung zwischen Arbeitsstellung und Filterwechselstellung kann sich der maximale Stellweg in axialer Richtung auf die Distanz zwischen Arbeitsstellung und Filterwechselstellung beschränken. Insbesondere ist es nicht nötig, den Filterbolzen ausgehend von der Arbeitsstellung zu gegenüberliegenden Seiten hin zu verfahren, um einmal in die Filterwechselstellung zu verfahren und das andere Mal in die Anfahrstellung zu verfahren, so wie dies bei herkömmlichen Siebwechslern der Fall ist, die in der Anfahrstellung das Material in das Gehäuse ableiten.

In Weiterbildung der Erfindung ist es vorteilhafterweise nicht notwendig, den Filterbolzen rotatorisch zu verstellen, wenn der Filterbolzen von der Arbeitsstellung direkt in die Filterwechselstellung verschoben oder umgekehrt von der Filterwechselstellung direkt in die Arbeitsstellung verschoben werden soll. Der Filterbolzen kann ohne rotatorische Verdrehung direkt zwischen Arbeitsstellung und Filterwechselstellung verfahren werden, auch wenn dabei in axialer Richtung betrachtet die Anfahrstellung überfahren wird. Wenn der Filterbolzen direkt in die Filterwechselstellung oder umgekehrt nach einem Filterwechsel direkt in die Arbeitsstellung verfahren werden soll, ist es nicht notwendig, den Ableitkanal mit dem gehäuseseitigen Einlasskanal in Fluchtung zu bringen und es kann die rotatorische Stellbewegungskomponente, die beim Anfahren der Anfahrstellung bewerkstelligt wird, eingespart werden.

In vorteilhafter Weiterbildung der Erfindung kann ein Drehantrieb zum Verdrehen des Filterbolzens in der Bolzenaufnahme vom Filterbolzen abkuppelbar sein bzw. an den Filterbolzen angekuppelt werden, um zum Anfahren der Anfahrstellung den Filterbolzen verdrehen zu können und beim direkten Verfahren des Filterbolzens zwischen Anfahrstellung und Filterwechselstellung den Drehantrieb abkuppeln zu können bzw. nicht verstellen zu müssen.

Eine lösbare Kupplung zwischen Drehantrieb und Filterbolzen kann vorteilhafterweise in axialer Richtung, d.h. im Wesentlichen parallel zur Längsachse des Filterbolzens, ein- und auskuppelbare Kupplungsmittel bzw. Kupplungshälften umfassen. Insbesondere kann die Kupplung dazu ausgebildet sein, durch axiales Verfahren des Filterkolbens einzukuppeln bzw. umgekehrt auszukuppeln. Soll der Drehantrieb angekuppelt werden, um den Filterbolzen zum Anfahren der Anfahrstellung zu verdrehen, kann beispielsweise der Drehantrieb eine bestimmte Kupplungsstellung anfahren und sodann der Filterbolzen axial in eine Kupplungsstellung verfahren werden, um an den Drehantrieb angekuppelt zu werden und sodann vom Drehantrieb verdreht werden zu können. Umgekehrt kann der Filterbolzen durch axiales Verschieben vom Drehantrieb abgekuppelt werden, so dass dann der Drehantrieb wieder zurück in eine passive Wartestellung verfahren werden kann, in welcher der Filterbolzen ohne Kollision mit dem Drehantrieb über die axiale Anfahrstellung hinweggefahren werden kann.

Beispielsweise kann der Drehantrieb einen Stellaktor umfassen, der eine Wirkrichtung besitzt, die quer zur Filterbolzen-Längsachse verläuft und im Wesentlichen parallel zu einer Tangente zum Filterbolzen ausgerichtet sein kann. Beispielsweise kann ein Druckmittelaktor Verwendung finden, der als Pneumatikzylinder oder Hydraulikzylinder ausgebildet sein kann. Im angekuppelten Zustand kann der genannte Stellaktor nach Art eines Kurbelantriebs auf den Filterbolzen wirken, um diesen in der Bolzenaufnahme zu verdrehen.

In vorteilhafter Weiterbildung der Erfindung kann der Drehantrieb dazu ausgebildet sein, den Filterbolzen in der Bolzenaufnahme bei axial stehendem Filterbolzen zu verdrehen und/oder unabhängig von einer axialen Verstellung des Filterbolzens zu verdrehen. Hierdurch ist es anders als bei einer kulissenartigen Drehsteuerung nicht nötig, den Filterbolzen gleichzeitig axial zu verstellen, um eine Verdrehung zu erreichen. Insbesondere ist es hierdurch möglich, den Filterbolzen ohne rotatorische Komponente nur axial zu verschieben, wenn beispielsweise der Filterbolzen aus der Arbeitsstellung direkt in die Filterwechselstellung verfahren werden soll. Da die rotatorische Verstellung nur dann ausgeführt wird, wenn sie tatsächlich benötigt wird, wird ein insgesamt verschleißarmer Betrieb der Filtriervorrichtung erreicht.

Ein Axialantrieb zum Verstellen des Filterbolzens in Längsrichtung des Filterbolzens bzw. in Längsrichtung der Bolzenaufnahme kann in vorteilhafter Weiterbildung der Erfindung einen Stellaktor in Form eines Druckmittelzylinders, beispielsweise Pneumatik- oder Hydraulikzylinders umfassen, der im Wesentlichen koaxial zum Filterbolzen an einer Stirnseite des Gehäuses angeordnet sein kann. Grundsätzlich wären aber auch andere Axialantriebe beispielsweise in Form eines Spindelmotors oder eines Stellaktors mit zwischengeschaltetem Hebelgetriebe möglich.

Um kompakt zu bauen, können der genannte Axialantrieb und der genannte Drehantrieb in vorteilhafter Weiterbildung der Erfindung auf derselben Seite des Gehäuses angeordnet sein, insbesondere auf der Gehäuseseite, die der Filterwechsel- und/oder Ableitseite des Gehäuses gegenüberliegt. Die Filterwechsel- und/oder Ableitseite des Gehäuses meint dabei die Gehäuseseite, auf der der Filterkolben ein Stück weit aus dem Gehäuse herausgefahren wird, um das beim Anfahren abzuleitende Fluid abzuleiten bzw. in der Filterwechselstellung die Filtereinrichtung wechseln zu können. Durch die Anordnung der Axial- und Drehantriebe auf der gegenüberliegenden Gehäuseseite wird weder der Filterwechsel beeinträchtigt noch droht den Antrieben eine Verschmutzung durch das abzuleitende Fluid, welches aus dem Filterbolzen tropft, wenn der Ableitkanal in der Anfahrstellung des Filterbolzens aktiv ist. Gleichzeitig kann die Filtervorrichtung insgesamt kompakt bauen, da die Axial- und Drehantriebe auf der genannten Gehäuseseite überlappend angeordnet sein können. Betrachtet man das Gehäuse in einer Blickrichtung senkrecht zur Filterbolzen-Längsachse können die Axial- und Drehantriebe einander zumindest teilweise überlappend angeordnet sein.

Nichtsdestotrotz kann der Drehantrieb, insbesondere bei Ausbildung in Form eines Druckmittelzylinders, zu einer benachbarten Gehäuseseite vorstehen bzw. dort angeordnet sein, wobei die genannte benachbarte Gehäuseseite zu der Gehäuseseite benachbart ist, an der der Axialantrieb vorgesehen ist.

Die Verdrehung des Filterbolzens zwischen Arbeitsstellung einerseits und ableitender Anfahrstellung andererseits kann relativ klein bemessen sein, beispielsweise zwischen 20° und 120° oder zwischen 30° und 90° betragen, das heißt der Filterbolzen wird um einen Winkel zwischen 30° bis 60° verdreht, um aus der Arbeitsstellung in die Anfahrstellung verbracht zu werden bzw. die Einlassöffnung des Ableitkanals in den Sektor zu verschwenken, in dem der Einlasskanal in die Bolzenaufnahme mündet.

Der genannte Ableitkanal hat seine Auslassöffnung bzw. seinen Ableitablauf vorzugsweise in einem Endabschnitt des Filterbolzens, der beim Anfahren der Anfahrstellung aus dem Gehäuse herausgefahren wird. Insbesondere kann der Ableitkanal auf einer Stirnseite des Filterbolzens münden, sodass das abgeleitete Fluid von der Stirnseite des Filterbolzens herausströmen bzw. von dort abtropfen kann. Hierdurch kann auch bei einem kleinen axialen Stellweg zwischen Arbeitsstellung und Anfahrstellung sichergestellt werden, dass das abzuleitende Fluid nicht in das Gehäuse tropft bzw. nicht das Gehäuse verunreinigt, sondern direkt von dem Filterbolzen abtropft.

In Weiterbildung der Erfindung kann der Ableitkanal zumindest in der Anfahrstellung des Filterbolzens durchgängig von seiner Einlassöffnung bis zum Ableitablauf abschüssig ausgebildet sein, sodass die Schwerkraft dabei hilft, das abzuleitende Fluid aus dem Filterbolzen herauslaufen zu lassen. Beispielsweise kann der genannte Ableitkanal einen Einlassabschnitt besitzen, der vom Außenumfang des Filterbolzens zu dessen Zentrum führt und im Anschluss hieran einen axialen Abschnitt aufweisen, der zu einer Stirnseite des Filterbolzens führt und dabei abschüssig konturiert ist.

In Weiterbildung der Erfindung kann der genannte Ableitkanal auch einen sich zum Ableitauslass hin vergrößernden Querschnitt besitzen, sodass sich die abzuleitende Kunststoffschmelze leichter tut, aus der Ableitöffnung herauszuströmen und entlang des Ableitkanals einen sich verringernden Strömungswiderstand erfährt.

In vorteilhafter Weiterbildung der Erfindung kann sich der Ableitkanal zur Auslassöffnung hin konisch erweitern. Eine solche konische Konturierung des Ableitkanals stellt einerseits einen sich vergrößernden Querschnitt sicher und erreicht andererseits einen abschüssigen Boden.

Der genannte Ableitkanal kann sich durch eine axiale Säule erstrecken, die freiliegend den Filterabschnitt des Filterbolzens überbrückt und vorzugsweise eine Längsmittelachse des Filterbolzens enthalten kann. Die genannte axiale Säule kann in Form eines Stegs ausgebildet sein, der durch die Filtrierkammer des Filterbolzens bzw. durch dessen Filterabschnitt hindurchtritt. Insbesondere kann die Filtriereinrichtung ein Bogensieb aufweisen, welches sich um die genannte Säule herum erstrecken kann. Ist der Filterbolzen in seiner Arbeitsstellung, wird die genannte Säule vom filtrierten bzw. zu filtrierenden Fluid quer umströmt, wenn das Fluid von der Einlassseite zur Auslassseite strömt. Durch die genannte Säule hindurch ist der Ableitkanal geführt.

In vorteilhafter Weiterbildung der Erfindung können in dem Gehäuse mehrere verstellbare Filterbolzen vorgesehen sein, um einen kontinuierlichen Betrieb zu ermöglichen. Insbesondere kann ein zweiter Filterbolzen in einer zweiten Bolzenaufnahme axial verschieblich aufgenommen sein, wobei der Einlasskanal und der Auslasskanal des Gehäuses jeweils gegabelt ausgebildet sein können, um über die Gabelung jeweils sowohl zu dem ersten als auch zu dem zweiten Filterbolzen zu führen. Eine solche gegabelte Ausbildung des Einlasskanals und des Auslasskanals ermöglicht es, das zu filtrierende Fluid wahlweise über jeden Filterbolzen einzeln von der Einlass- zur Auslassseite strömen zu lassen oder über beide Filterbolzen gemeinsam von der Einlassseite zur Auslassseite strömen zu lassen. Im Falle eines Filterwechsels kann das zu filtrierende Material über den zumindest einen anderen, in der Arbeitsstellung verbleibenden Filterbolzen weiterhin filtriert werden und von der Einlass- zur Auslassseite strömen. Sind beide oder alle Filterbolzen in der Arbeitsstellung, kann mit maximalem Durchsatz gearbeitet werden bzw. kann das Fluid dann über die genannten Gabelungen über alle Filtriereinrichtungen aller Filterbolzen strömen.

Der genannte zweite Filterbolzen kann dabei eine Anfahrstellung besitzen, in der der Einlasskanal vom Auslasskanal abgesperrt ist und der Einlasskanal nur über den Ableitkanal im ersten Filterbolzen mit der Umgebung des Gehäuses strömungsverbunden ist.

Vorteilhafterweise ist eine Steuervorrichtung vorgesehen, die die Verstellung der beiden Filterbolzen bzw. deren Antriebseinrichtungen beim Anfahren der Anfahrstellung koordiniert bzw. kontrolliert, und zwar insbesondere derart, dass der erste Filterbolzen durch axiales Verfahren und rotatorisches Verstellen in seine Anfahrstellung gebracht wird und der zweite Filterbolzen nur durch axiales Verstellen in seine Anfahrstellung gebracht wird, in der der zweite Filterbolzen den ihm zugeordneten Strömungsweg von der Einlass- zur Auslassseite blockiert.

Die Erfindung wird nachfolgend anhand eines bevorzugten Ausführungsbeispiels und zugehörigen Zeichnungen näher erläutert. In den Zeichnungen zeigen:
- Fig. 1:: eine perspektivische Ansicht einer Filtriervorrichtung in Form eines Siebwechslers mit zwei Filterbolzen in einem Filtergehäuse, wobei beide Filterbolzen in ihrer Betriebsstellung gezeigt sind,
- Fig. 2:: eine perspektivische Darstellung der Filtriervorrichtung aus Fig. 1, wobei einer der Filterbolzen in seiner Filterwechselstellung zum Wechseln des Filters gezeigt ist,
- Fig. 3:: eine perspektivische Darstellung der Filtriervorrichtung aus den vorhergehenden Figuren, wobei beide Filterbolzen in ihrer Betriebsstellung sind und der Drehantrieb zum Verdrehen des unteren Filterbolzens in seine Kupplungsstellung fährt,
- Fig. 4:: eine perspektivische Darstellung der Filtriervorrichtung ähnlich Fig. 3, wobei der untere Filterbolzen axial in seine Kupplungsstellung zum Ankuppeln an den Drehantrieb gefahren ist,
- Fig. 5:: eine perspektivische Darstellung der Filtriervorrichtung ähnlich den Figuren 3 und 4, wobei der Drehantrieb den unteren Filterbolzen verdreht hat, um in die Anfahrstellung zu fahren,
- Fig. 6:: eine perspektivische Darstellung der Filtriervorrichtung ähnlich Fig. 5, wobei der obere Filterbolzen in eine Blockstellung gefahren ist, um das abzuscheidende Material nur über den unteren Filterbolzen abzuleiten,
- Fig. 7:: eine perspektivische Darstellung der Filtriervorrichtung aus den vorhergehenden Figuren, die das Ableiten des Materials über den Ableitkanal im unteren Filterbolzen zeigt,
- Fig. 8:: eine perspektivische Darstellung der Filtriervorrichtung nach dem Anfahrvorgang, wobei der obere Filterbolzen zurück in seine Betriebsstellung gefahren ist,
- Fig. 9:: eine perspektivische Darstellung der Filtriervorrichtung ähnlich Fig. 8, wobei der untere Filterbolzen vom Drehantrieb zurück in seine betriebsgemäße Drehstellung gefahren ist,
- Fig. 10:: eine perspektivische Darstellung der Filtriervorrichtung ähnlich Fig. 9, wobei der untere Filterbolzen in seine Betriebsstellung gefahren und der Drehantrieb dabei abgekuppelt wird,
- Fig. 11:: eine perspektivische Darstellung der Filtriervorrichtung ähnlich Fig. 10, wobei der abgekuppelte Drehantrieb zurück in seine Wartestellung gefahren wird, und
- Fig. 12:: eine perspektivische Darstellung der Filtriervorrichtung ähnlich Fig. 11, wobei der untere Siebbolzen vollständig in seine Betriebsstellung zurückgefahren ist.

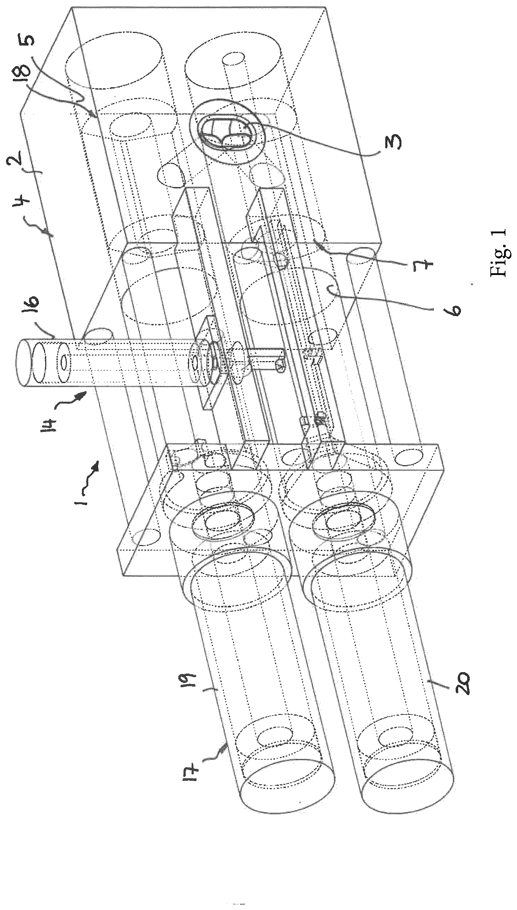

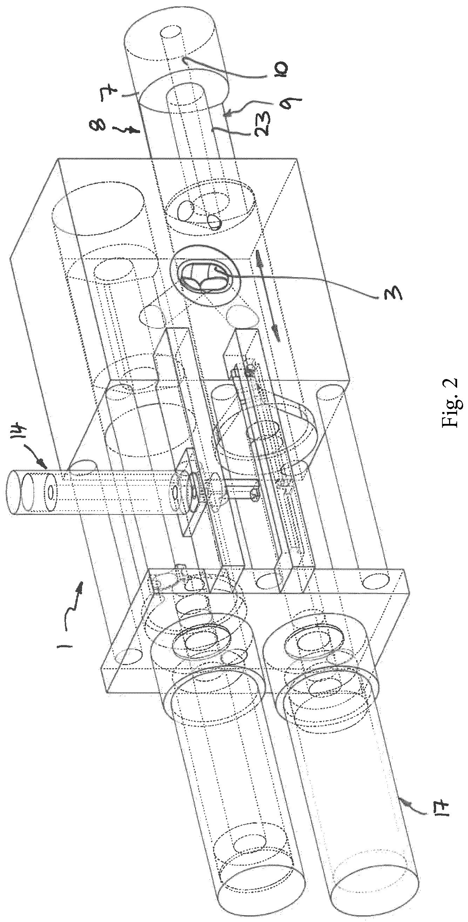

Wie die Figuren zeigen, kann die Filtriervorrichtung 1 als Siebwechsler ausgebildet sein, der zwei verstellbare Filterbolzen 7 und 18 aufweisen kann, um kontinuierlich arbeiten zu können. Ist einer der Filterbolzen in seiner Filterwechselstellung, um den Filter des Bolzens zu wechseln, vgl. Fig. 2, kann das zu filternde Material über den anderen, weiterhin betriebsbereiten Filterbolzen gefiltert werden. Sind beide Filterbolzen 7, 18 in ihrer Betriebsstellung bzw. Arbeitsstellung, vgl. Fig. 1, kann das zu filternde Material über beide Filterbolzen 7, 18 geleitet werden.

Die Filtriervorrichtung 1 umfasst dabei ein Gehäuse 2, in dem zwei Bolzenaufnahmen 5, 6 ausgebildet sein können, um die beiden Filterbolzen 7, 18 verschieblich aufzunehmen, wobei zumindest einer der Filterbolzen 7 in der zugehörigen Bolzenaufnahme 6 auch verdreht werden kann. Die beiden Bolzenaufnahmen 5, 6 können insbesondere in Form von zylindrischen Durchgangsausnehmungen ausgebildet sein, beispielsweise in Form von Bohrungen, wobei ggf. aber auch Durchmessersprünge beispielsweise durch Ausdrehen oder ähnliche Bearbeitungen vorgesehen sein können.

Die Filterbolzen 7, 18 sind im Wesentlichen bzw. zumindest abschnittsweise ebenfalls zylindrisch, insbesondere kreiszylindrisch konturiert, um passgenau bzw. spielfrei und gegenüber zähflüssiger Kunststoffschmelze dichtend in den Bolzenaufnahmen 6 zu sitzen.

Insbesondere können die genannten Filterbolzen 7 und 18 jeweils zwei zylindrisch konturierte Endabschnitte besitzen, zwischen denen die Filterbolzen 7, 18 jeweils einen Filterabschnitt 8 besitzen, der jeweils mit einer Filtereinrichtung 9 beispielsweise in Form eines bogenförmig gekrümmten Siebs versehen ist, wobei ggf. aber auch plattenförmige Siebe oder andere Filterpakete Verwendung finden können.

In dem besagten Filterabschnitt 8 sind die Filterbolzen 7 und 18 jeweils im Durchmesser verjüngt und/oder mit Querausnehmungen und/oder Abflachungen und/oder Verjüngungen versehen, um das zu filtrierende Fluid, insbesondere polymere Kunststoffschmelzen quer durch die Bolzenaufnahme 6 strömen zu lassen. Alterantiv oder zusätzlich kommt es auch in Betracht, die Bolzenaufnahmen 6 in einem Bereich, in dem die Filtriereinrichtungen 9 der Filterbolzen 7 in deren Betriebsstellung positioniert sind, aufzuweiten bzw. speziell zu konturieren, um nach Passieren der Filtriereinrichtung quer zur anderen Seite der Aufnahme strömen zu können.

Wie die Figuren zeigen, umfasst das Gehäuse 2 einen Einlasskanal 3 sowie einen Auslasskanal 4, die auf gegenüberliegenden Gehäuseseiten liegen bzw. münden können und jeweils mit den beiden Bolzenaufnahmen 5, 6 in Strömungsverbindung stehen bzw. quer zu den genannten Bolzenaufnahmen 5, 6 führen. Die Einlass- und Auslasskanäle 3, 4 können sich von einer gemeinsamen Mündung ausgehend jeweils gabeln, um zu beiden Bolzenaufnahmen 5, 6 zu führen, vgl. beispielsweise Fig. 1 und Fig. 2.

Die beiden Filterbolzen 7 können durch jeweils einen Axialantrieb 17 in den Bolzenaufnahmen 6 axial verstellt werden, wobei die genannten Axialantriebe 17 beispielsweise zwei Druckmittelzylinder 19, 20 aufweisen können, die jeweils stirnseitig vor einer Bolzenaufnahme 6 bzw. dem darin aufgenommenen Filterbolzen 7 angeordnet sein können. Die genannten Druckmittelzylinder 19, 20 können insbesondere parallel oder koaxial zur Filterbolzen-Längsachse angeordnet sein und am Gehäuse 2 abgestützt bzw. montiert sein, wobei beispielsweise die ein- und ausfahrbare Kolbenstange der jeweiligen Druckmittelzylinder 19 und 20 mit einem der Filterbolzen 7 verbunden sein kann, um durch Ein- und Ausfahren der Kolbenstange den Filterbolzen 7 bzw. 18 axial in der Bolzenaufnahme 5, 6 verfahren zu können.

Wie Fig. 2 verdeutlicht, können die Axialantriebe 17 die Filterbolzen 7 und 18 zur gegenüberliegenden Seite jeweils aus dem Gehäuse 2 in eine Filterwechselstellung herausfahren, in der die Filtriereinrichtung 9 am Filterabschnitt 8 des Filterbolzens 7 frei zugänglich ist, um gewechselt werden zu können bzw. gereinigt werden zu können. Ist beispielsweise einer der Filterbolzen 7 in der besagten Filterwechselstellung, kann der noch in der Bolzenaufnahme 6 verbleibende zylindrische Endabschnitt des Filterbolzens 7 den Einlasskanal 3, genauer gesagt dessen zur Bolzenaufnahme 6 führende Gabelung sperren, sodass das Fluid lediglich noch zu der zweiten Bolzenaufnahme 5 des anderen Filterbolzens 8 strömen und dort filtriert werden kann.

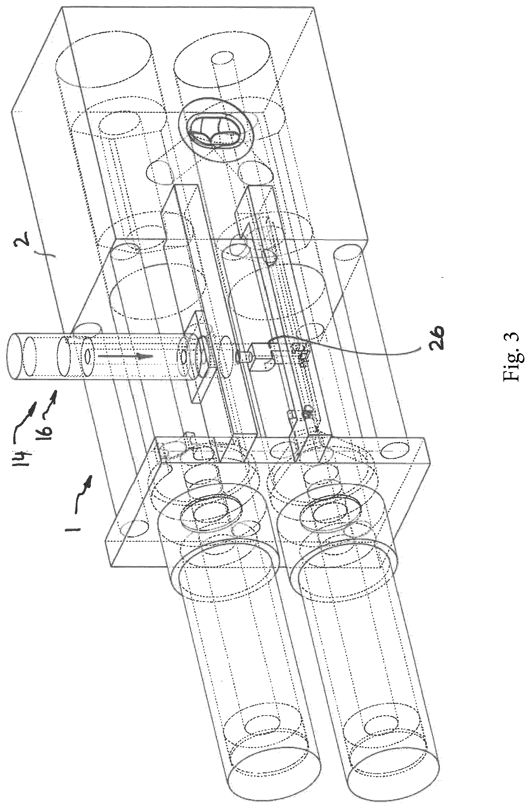

Wie die Figuren 3 bis 7 verdeutlichen, ist einer der Filterbolzen 7, vorzugsweise ein unterer Filterbolzen 7, ferner mit einem Ableitkanal 10 versehen, um, wie eingangs beschrieben, beim Anfahren der Anlage noch nicht verwertbares Material abzuscheiden.

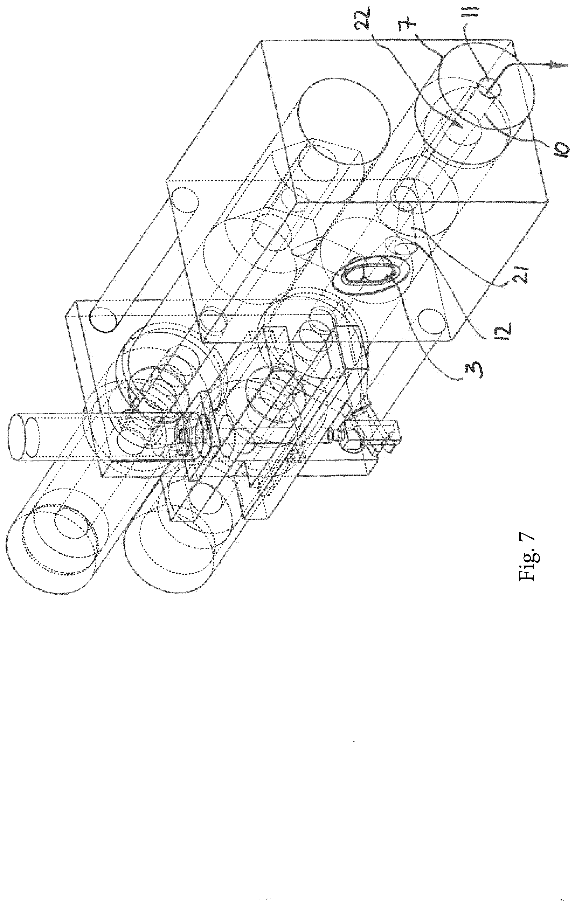

Der besagte Ableitkanal 10 kann sich im Wesentlichen axial durch den Filterbolzen 7 an der Filtriereinrichtung 9 vorbei erstrecken und stromauf bzw. einlassseitig einen quer durch den Bolzen gehenden Querkanalabschnitt 21 besitzen, der eine am Außenumfang des Filterbolzens 7, insbesondere dessen zylindrischen Endabschnitt, mündende Einlassöffnung 12 besitzt und andererseits mit einem Axialkanalabschnitt 22 verbunden ist, der zentral durch den Filterbolzen 7 in axialer Richtung hindurchgeht und auf einer Stirnseite des Filterbolzens 7 mündet bzw. dort einen Ableitablauf 11 besitzt, vgl. Fig. 7.

Insbesondere erstreckt sich der genannte Ableitkanal 10 mit seinem Axialkanalabschnitt 22 durch eine Säule 23 des Filterbolzens 7 hindurch, die in dem genannten Filterabschnitt 8 des Filterbolzens 7 ausgebildet ist und dessen zuvor beschriebenen, verjüngten Durchmesserbereich bildet, um das zu filtrierende Gut quer durch die Bolzenaufnahme 6 strömen zu lassen. Die genannte Säule 23 kann die Längsmittelachse des Filterbolzens 7 enthalten und kann die beiden beschriebenen, zylindrischen Endabschnitte des Filterbolzens 7 miteinander verbinden.

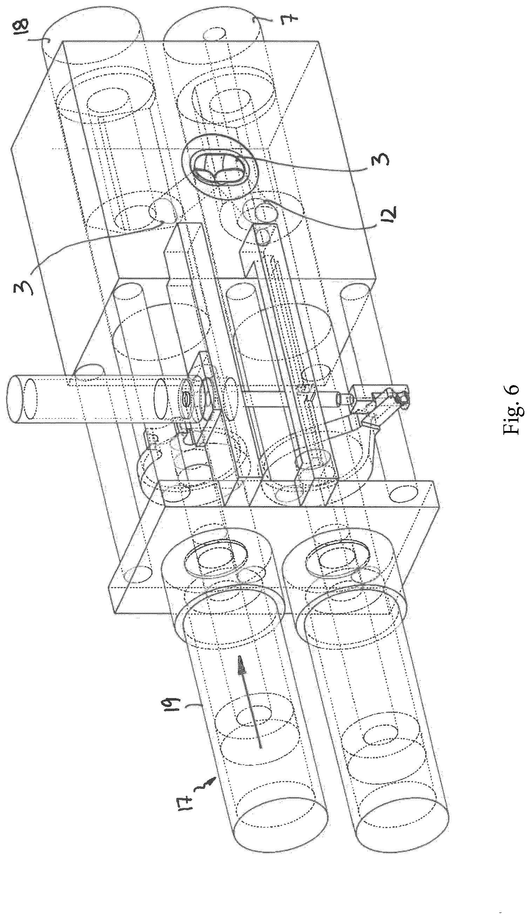

Wie Fig. 6 und Fig. 7 verdeutlichen, kann der genannte Ableitkanal 10, zumindest wenn sich der Filterbolzen 7 in seiner Anfahrstellung befindet, von der Einlassöffnung 12 durchgängig bis zum Ableitablauf 11 abschüssig ausgebildet sein. Alternativ oder zusätzlich kann der Ableitkanal 10, zumindest im Bereich seines Axialkanalabschnitts 22, einen sich in Strömungsrichtung bzw. zum Ableitablauf 11 hin kontinuierlich oder stufenweise größer werdenden Querschnitt besitzen. Insbesondere kann der Ableitkanal 10, zumindest in seinem Axialkanalabschnitt 22, konisch ausgebildet sein und sich zur Ableitöffnung 11 hin vergrößern.

Der Ableitkanal 11 erstreckt sich dabei über die Filtriereinrichtung 9 hinweg bzw. nach Art eines Bypasses um diese herum. In axialer Richtung betrachtet liegen die Einlassöffnung 12 und der Ableitablauf 11 auf gegenüberliegenden Seiten der Filtriereinrichtung 9, um abzuleitendes Fluid an der Filtriereinrichtung 9 vorbeizuleiten.

Der Querkanalabschnitt 21 ist dabei in dem Filterbolzen 7 derart ausgebildet, dass die Einlassöffnung 12 in einem Sektor des Filterbolzens 7 auf dessen Außenumfang mündet, der an sich - genauer gesagt bei Betrachtung der Betriebsstellung gemäß Fig. 1 und/oder bei Betrachtung der Filterwechselstellung gemäß Fig. 2 - nicht im selben Sektor liegt wie der Einlasskanal 3, genauer gesagt dessen Mündung in die Bolzenaufnahme 6. Mit anderen Worten, wenn der Filterbolzen 7 zwischen den in den Figuren 1 und 2 gezeigten Arbeits- und Filterwechselstellungen durch den Axialantrieb 17 hin- und herverfahren wird, passiert die Einlassöffnung 12 des Ableitkanals 10 nicht den Einlasskanal 3 und gelangt mit dem Einlasskanal 3 nicht in Strömungsverbindung.

Um in einer Ableitstellung des Filterbolzens 7, die zwischen dessen Arbeitsstellung und dessen Filterwechselstellung liegt, den Ableitkanal 10 mit der Einlassöffnung 12 in Strömungsverbindung mit dem Einlasskanal 3 zu bringen, wird der Filterbolzen 7 durch einen Drehantrieb 14 in der Bolzenaufnahme 6 verdreht.

Hierzu umfasst die Filtriervorrichtung 1 einen Drehantrieb 14, der einen quer zur Filterbolzen-Längsachse angeordneten Druckmittelzylinder bzw. Stellaktor 16 aufweisen kann, dessen Stellachse bzw. Wirkrichtung quer zur Filterbolzen-Längsachse und insbesondere parallel zu einer Tangente an den Filterbolzen 7 ausgerichtet sein kann. Beispielsweise kann der Stellaktor 16 des Drehantriebs 14 auf der Seite der Axialantriebe 17 des Gehäuses 2 angeordnet und am Gehäuse 2 und/oder der Lagerung für die Axialantriebe 17 abgestützt sein, insbesondere montiert sein derart, dass ein Arbeitskopf des Stellaktors 16 quer zur Filterbolzenlängsachse an der damit verbundenen Kolbenstange des Axialantriebs 17 vorbeigefahren werden kann.

Der Drehantrieb 14 ist mit dem Filterbolzen 7 durch eine Kupplung 24 lösbar verbindbar, um den Drehantrieb 14 ankuppeln zu können, wenn der Filterbolzen 7 in seine Anfahrstellung verdreht werden soll. Andererseits kann der Drehantrieb 14 durch die Kupplung 24 abgekuppelt werden, um den Filterbolzen 7 ohne Einwirkung des Drehantriebs 14 und ohne rotatorische Komponente direkt zwischen Arbeitsstellung und Filterwechselstellung verfahren zu können, wie dies die Figuren 1 und 2 verdeutlichen.

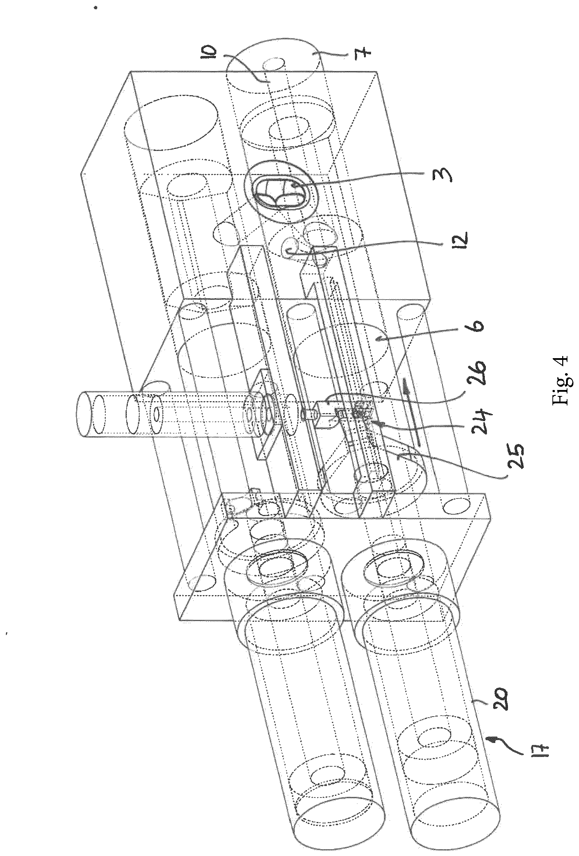

Die Kupplung 24 kann beispielsweise an einer Kolbenstange des Axialantriebs 17 angreifen, welche drehfest mit dem Filterbolzen 7 verbunden sein kann, wobei die Kupplung 24 ein als Kurbel dienendes Kupplungsstück 25 aufweisen kann, das drehfest mit dem Filterbolzen 7, insbesondere der damit drehfest verbundenen Kolbenstange, verbunden sein kann und hiervon quer vorsteht, vgl. Fig. 3 und Fig. 4.

Um den Drehantrieb 14 an den Filterbolzen 7 anzukuppeln, kann der Drehantrieb 14 zunächst in eine Kupplungsstellung ausgefahren werden, in welcher der Arbeitskopf 26 des Drehantriebs 14 in eine Position gelangt, die von dem Kupplungsstück 25 der Kupplung 24 überstrichen wird, wenn der Filterbolzen 7 axial verfahren wird. Der Filterbolzen 7 kann sich hierbei noch in der Arbeitsstellung befinden, wenn der Drehantrieb 14 in seine Kupplungsstellung verfahren wird, vgl. Fig. 3.

Um den Drehantrieb 14 anzukuppeln, verfährt der Axialantrieb 17 den Filterbolzen 7 ein Stück weit in axialer Richtung, bis das Kupplungsstück 25 mit dem Arbeitskopf 26 in Eingriff gerät, vgl. Fig. 4.

Vorteilhafterweise kann die genannte Kupplungsstellung des Filterbolzens 7 so gewählt sein, dass die Einlassöffnung 12 des Ableitkanals 10 in axialer Richtung betrachtet bereits passend für den Einlasskanal 3 positioniert ist, jedoch rotatorisch hiervon noch versetzt ist, vgl. Fig. 4.

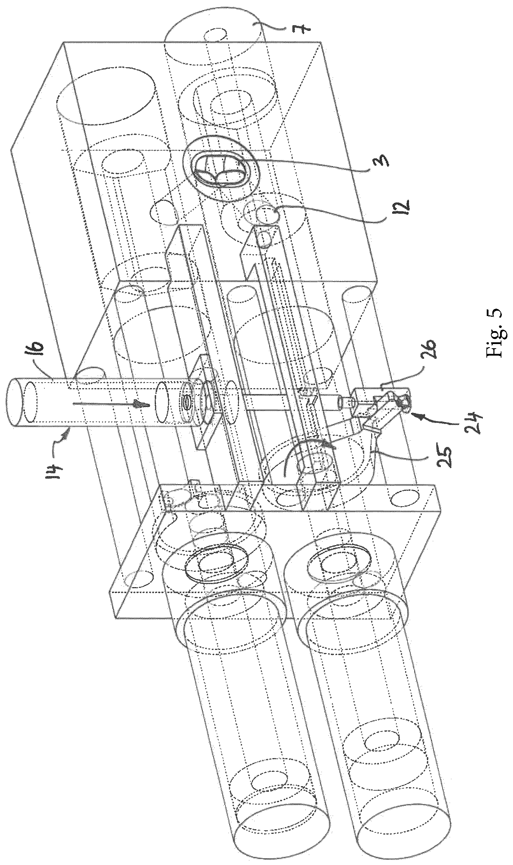

Um den Ableitkanal 10 mit dem Einlasskanal 3 in Strömungsverbindung zu bringen, wird dann der Drehantrieb 14 betätigt, um den Filterbolzen 7 soweit zu verdrehen, dass die Einlassöffnung 12 des Ableitkanals 10 mit dem Einlasskanal 3 zur Überdeckung gelangt, vgl. Fig. 5.

Um zu verhindern, dass in der Anfahrstellung das abzuleitende Material in die Filtriereinrichtung des zweiten Filterbolzens 18 strömt, wird der Filterbolzen 18 axial in eine Blockadestellung verfahren, in der der zylindrische Endabschnitt des zweiten Filterbolzens 18 die in seine Bolzenaufnahme 5 führende Gabelung des Einlasskanals 3 blockiert, vgl. Fig. 6.

Sind die Filterbolzen 7 und 18 in der in den Figuren 6 und 7 gezeigten Anfahrstellung, kann die Anlage angefahren werden, wobei in die Filtriereinrichtung 1 gelangende Schmelze bzw. gelangendes Fluid über den Ableitkanal 10 des Filterbolzens 7 abgeleitet wird. Das abgeleitete Material kann aus dem stirnseitigen Ableitablauf 11 herausströmen bzw. abtropfen, ohne das Gehäuse 2 zu verschmutzen.

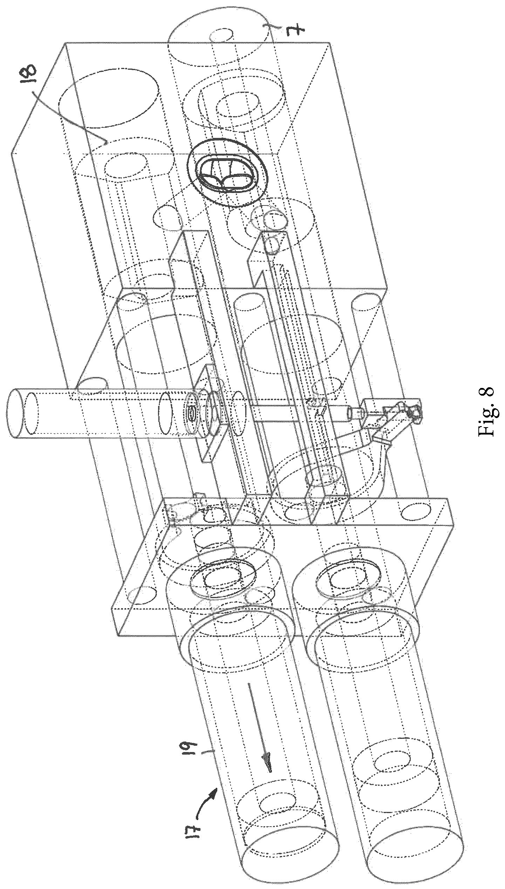

Ist das für die weitere Verarbeitung nicht geeignete Material abgeleitet, kann der Produktionsprozess bzw. die bestimmungsgemäße Filtrierung dadurch gestartet werden, dass der zweite Filterbolzen 18 aus seiner Blockadestellung zurück in die Betriebs- bzw. Arbeitsstellung verfahren wird, indem der Axialantrieb 17 den Filterbolzen 18 zurückzieht bzw. zurück in die Arbeitsstellung verfährt, vgl. Fig. 8. Hierdurch kann das brauchbare Fluid unmittelbar über die Filtriereinrichtung 9 des zweiten Filterbolzens 18 strömen und dem Auslasskanal 4 und damit dem nachfolgenden Verarbeitungsprozess zugeführt werden.

Zeitgleich oder danach kann der Filterbolzen 7 aus seiner Anfahrstellung wegbewegt werden, indem zunächst der Drehantrieb 14 den Filterbolzen 7 wieder soweit verdreht, dass der Ableitkanal 10 nicht mehr mit dem Einlasskanal 3 strömungsverbunden ist. Insbesondere kann der Drehantrieb 14 den Filterbolzen 7 wieder soweit zurückdrehen, dass die Filtriereinrichtung 9 rotatorisch passend ausgerichtet ist, um bei dann folgendem axialen Verfahren vom Einlasskanal 3 her kommendes Fluid filtrieren zu können.

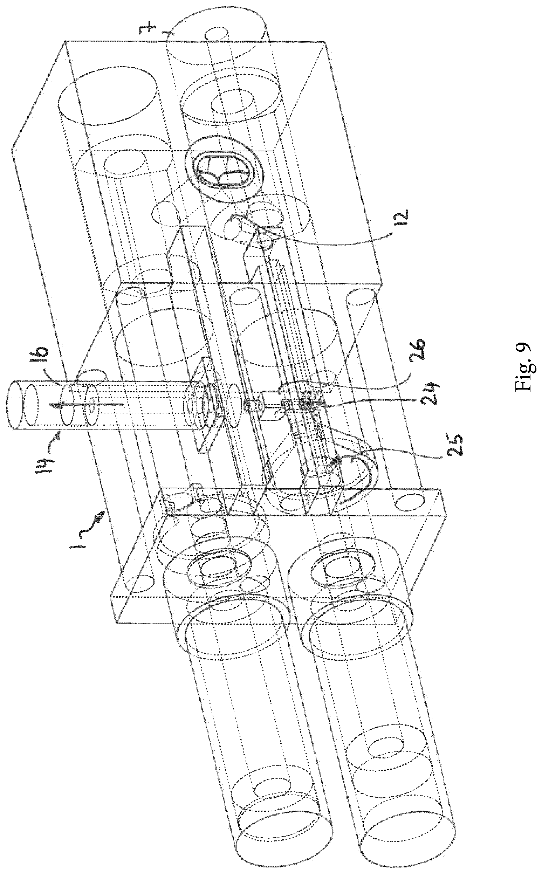

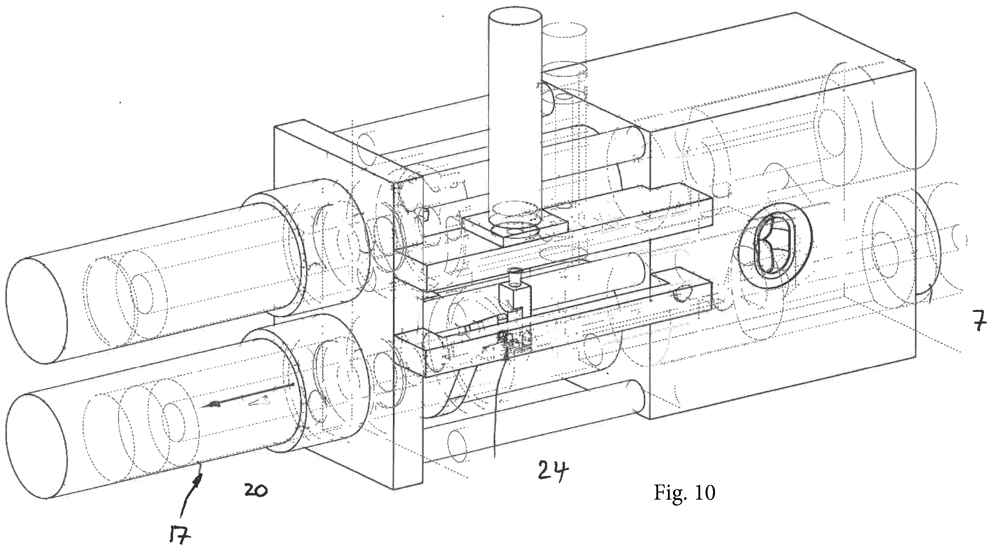

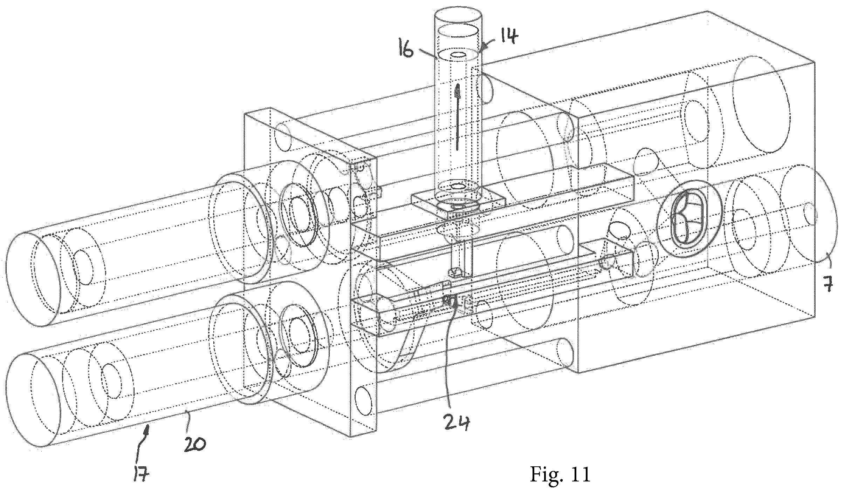

Ist der Filterbolzen 7 zurückgedreht, vgl. Fig. 9, kann der Axialantrieb 17 den Filterbolzen 7 axial verstellen, um die Kupplung 24 zu lösen, vgl. Fig. 10, woraufhin dann der Drehantrieb 14 wieder zurück in seine Wartestellung fahren kann, vgl. Fig. 11.

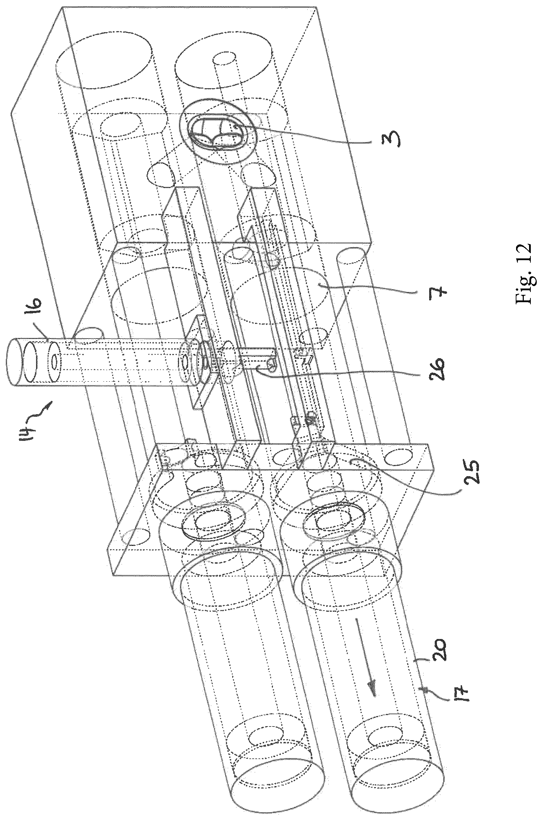

Schließlich kann der Filterbolzen 7 axial zurück in seine Arbeitsstellung verfahren werden, sodass das zu filtrierende Gut wieder über beide Filterbolzen 7 und 18 strömen bzw. von beiden Filterbolzen 7 und 18 filtriert werden, kann, vgl. Fig. 12.

## Patentansprüche

1. Filtriervorrichtung zum Filtrieren von Kunststoffschmelze (S), mit einem Gehäuse (2), das einen Einlasskanal (3) und einen Auslasskanal (4) aufweist, sowie einem Filterbolzen (7), der zwischen den genannten Einlass- und Auslasskanälen (3, 4) angeordnet und in einer Bolzenaufnahme (6) des Gehäuses (2) axial verschieblich und verdrehbar aufgenommen ist, wobei der Filterbolzen (7) einen Filterabschnitt (8) mit einer Filtriereinrichtung (9), die in einer Arbeitsstellung des Filterbolzens (7) zwischen dem Einlasskanal (3) und dem Auslasskanal (4) angeordnet ist und den genannten Einlasskanal (3) mit dem Auslasskanal (4) verbindet, sowie einen Ableitkanal (10) aufweist, der in einer Anfahrstellung des Filterbolzens (7) mit dem Einlasskanal (3) strömungsverbunden ist und an der Filtriereinrichtung (9) vorbei zu einem Ableitablauf (11) des Filterbolzens (7) führt, **dadurch gekennzeichnet, dass** der Filterbolzen (7) in der genannten Arbeitsstellung einerseits und der genannten Anfahrstellung andererseits unterschiedliche Drehstellungen in der Bolzenaufnahme (6) einnimmt, wobei eine am Außenumfang des Filterbolzens (7) liegende Einlassöffnung (12) des Ableitkanals (10) in einem Umfangssektor des Filterbolzens (7) liegt, der in der Arbeitsstellung des Filterbolzens (7) gegenüber dem Einlasskanal (3) des Gehäuses (2) rotatorisch versetzt ist und in der Anfahrstellung des Filterbolzens (7) sich mit dem genannten Einlasskanal (3) überdeckend angeordnet ist.

2. Filtriervorrichtung nach dem vorhergehenden Anspruch, wobei der Filterbolzen (7) eine Filterwechselstellung aufweist, in der die Filtereinrichtung (9) frei zugänglich für einen Austausch und/oder axial aus dem Gehäuse (2) herausgefahren ist, wobei der Filterbolzen (7) in seiner Arbeitsstellung und in seiner Filterwechselstellung zumindest näherungsweise dieselbe Drehstellung einnimmt.

3. Filtriervorrichtung nach dem vorhergehenden Anspruch, wobei die Anfahrstellung des Filterbolzens (7) axial betrachtet zwischen der Arbeitsstellung und der Filterwechselstellung des Filterbolzens (7) liegt, wobei der axiale Stellweg des Filterbolzens (7) von der Arbeitsstellung in die Anfahrstellung vorzugsweise kürzer ist als von der Anfahrstellung in die Filterwechselstellung, insbesondere derart, dass in der Anfahrstellung die Filtriereinrichtung (9) noch innerhalb des Gehäuses (2) angeordnet ist.

4. Filtriervorrichtung nach einem der vorhergehenden Ansprüche, wobei der Filterbolzen (7) ohne Verdrehen und/oder ohne Anfahren der rotatorischen Drehstellung der Anfahrstellung durch axiales Verstellen aus der Arbeitsstellung in die Filterwechselstellung und/oder umgekehrt aus der Filterwechselstellung in die Arbeitsstellung verfahrbar ist.

5. Filtriervorrichtung nach einem der vorhergehenden Ansprüche, wobei ein Drehantrieb (14) zum Verdrehen des Filterbolzens (7) in der Bolzenaufnahme (6) bei axial stehendem Filterbolzen (7) und/oder unabhängig von einer axialen Verstellung des Filterbolzens (7) vorgesehen ist.

6. Filtriervorrichtung nach dem vorhergehenden Anspruch, wobei der Drehantrieb (14) vom Filterbolzen (7) abkuppelbar ausgebildet ist, und der Filterbolzen (7) vom Drehantrieb (14) abgekuppelt zwischen seinen Arbeits- und Filterwechselstellungen axial verfahrbar und/oder durch axiales Verstellen des Filterbolzens (7) mit dem Drehantrieb (14) kuppelbar und vom Drehantrieb (14) abkuppelbar ist, insbesondere derart, dass der Drehantrieb in der Arbeitsstellung oder in der Filterwechselstellung des Filterbolzens (7) in eine Kupplungsstellung fahrbar und der Filterbolzen (7) anschließend axial in eine Kupplungsstellung verfahrbar ist.

7. Filtriervorrichtung nach einem der vorhergehenden Ansprüche, wobei der Drehantrieb (14) einen Stellaktor (16) mit einer Wirkrichtung aufweist, die quer zur Längsachse des Filterbolzens (7) und zumindest etwa parallel zu einer Tangente an den Filterbolzen (7) ausgerichtet ist.

8. Filtriervorrichtung nach einem der vorhergehenden Ansprüche, wobei der Drehantrieb (14) und ein Axialantrieb (17) zum axialen Verstellen des Filterbolzens (7) auf derselben Seite des Gehäuses (2), vorzugsweise der von der Gehäuseseite zum Filterwechsel abgewandten Seite des Gehäuses (2) angeordnet sind, wobei der Drehantrieb (14) in axialer Richtung des Filterbolzens (7) betrachtet insbesondere zwischen dem Gehäuse (2) und einem Druckmittelzylinder des Axialantriebs (17) zum axialen Verstellen des Filterbolzens (7) angeordnet ist.

9. Filtriervorrichtung nach einem der vorhergehenden Ansprüche, wobei der rotatorische Versatz des Filtrierbolzens (7) zwischen seiner Arbeitsstellung und seiner Anfahrstellung zwischen 20° und 120° oder zwischen 30° und 90° oder zwischen 30° und 60° beträgt.

10. Filtriervorrichtung nach einem der vorhergehenden Ansprüche, wobei der Ableitablauf (11) des Ableitkanals (10) in einem Endabschnitt des Filterbolzens (7) angeordnet ist, der in der Anfahrstellung des Filterbolzens (7) aus dem Gehäuse (2) heraussteht, und/oder der Ableitkanal (10) mit seinem Ableitablauf (11) auf einer Stirnseite des Filterbolzens (7) mündet.

11. Filtriervorrichtung nach einem der vorhergehenden Ansprüche, wobei der Ableitkanal (10) zumindest in der Anfahrstellung des Filterbolzens (7) durchgängig bis zum Ableitablauf (11) abschüssig ausgebildet ist.

12. Filtriervorrichtung nach einem der vorhergehenden Ansprüche, wobei der Ableitkanal (10) einen sich in Ableitrichtung kontinuierlich oder stufenweise vergrößernden Querschnitt besitzt, insbesondere zum Ableitablauf (11) hin konisch größer werdend ausgebildet ist.

13. Filtriervorrichtung nach einem der vorhergehenden Ansprüche, wobei der Ableitkanal (10) sich durch einen axiale Säule erstreckt, die freiliegend den Filterabschnitt (8) des Filterbolzens (7) überbrückt und vorzugsweise eine Längsmittelachse des Filterbolzens enthält.

14. Filtriervorrichtung nach einem der vorhergehenden Ansprüche, wobei in dem Gehäuse (2) ein zweiter Filterbolzen (18) in einer zweiten Bolzenaufnahme (5) axial verschieblich aufgenommen ist, wobei der Einlasskanal (3) und der Auslasskanal (4) des Gehäuses (2) jeweils gegabelt ausgebildet sind, sodass der Einlasskanal (3) wahlweise über jeden Filterbolzen (1, 18) einzeln oder beide Filterbolzen (7, 18) gemeinsam mit dem Auslasskanal (4) strömungsverbindbar ist, wobei der zweite Filterbolzen (18) vorzugsweise eine Anfahrstellung besitzt, in der der Einlasskanal (3) vom Auslasskanal (4) abgesperrt ist und der Einlasskanal (3) nur über den Ableitkanal (10) im ersten Filterbolzen (7) mit der Umgebung des Gehäuses (2) strömungsverbunden ist.

15. Filtriervorrichtung nach dem vorhergehenden Anspruch, wobei eine Steuervorrichtung zum Verstellen der beiden Filterbolzen (7, 18) vorgesehen und derart ausgebildet ist, dass zum Einstellen der Anfahrkonfiguration der Filtriervorrichtung (1) der erste Filterbolzen (7) durch axiales Verfahren und rotatorisches Verstellen in seiner Anfahrstellung gebracht und der zweite Filterbolzen (18) nur durch axiales Verstellen in seine Anfahrstellung gebracht wird.
